**Europäisches Patentamt**

**European Patent Office**

**Office européen des brevets**

(19)

(11) Numéro de publication: **0 276 609 B1**

(12)

# FASCICULE DE BREVET EUROPEEN

(45) Date de publication du fascicule du brevet:
01.08.90

(51) Int. Cl.⁵: **B60K 41/08, F16H 3/12**

(21) Numéro de dépôt: **87402950.7**

(22) Date de dépôt: **22.12.87**

(54) Procédé et dispositif de commande automatique de changement de rapport de transmission pour un ensemble embrayage boîte de vitesses.

(30) Priorité: **26.12.86 FR 8618192**

(43) Date de publication de la demande:
**03.08.88 Bulletin 88/31**

(45) Mention de la délivrance du brevet:
**01.08.90 Bulletin 90/31**

(84) Etats contractants désignés:
**BE DE ES GB IT SE**

(56) Documents cités:
**EP-A- 0 150 583**
**DE-A- 2 033 314**
**FR-A- 2 172 622**
**FR-A- 2 431 642**
**GB-A- 1 519 982**
**GB-A- 2 097 076**

(73) Titulaire: **REGIE NATIONALE DES USINES RENAULT,
Boîte postale 103 8-10 avenue Emile Zola,
F-92109 Boulogne-Billancourt(FR)**

(72) Inventeur: **Goujard, Bertrand, 7, rue Honoré Oursel,
F-94290 Villeneuve-Le-Roi(FR)**
Inventeur: **Huguet, Patrick, 8, rue Jules Verne,
F-78500 Sartrouville(FR)**

(74) Mandataire: **Chassagnon, Jean Alain et al, 8/10, avenue
Emile Zola, F-92109 Boulogne-Billancourt(FR)**

ACTORUM AG

## Description

La présente invention se rapporte à un procédé de commande automatique de changement de rapport de transmission dans une boite de vitesse reliée à un moteur d'entraînement, pour un ensemble constitué d'un embrayage à friction couplé à une boîte de vitesses a verrouillage par synchroniseurs et crabots et à arbre primaire susceptible de se trouver, pendant le passage d'un rapport de transmission à un autre, simultanément déconnecté mécaniquement de l'embrayage et de l'arbre secondaire relié à un organe à entraîner en rotation, dans lequel les synchroniseurs sont aptes à empêcher le crabotage d'un rapport de transmission aussi longtemps que les organes de synchronisation en contact de friction n'ont pas été synchronisés et où la commande d'accélérateur du moteur d'entraînement est inhibée ou ramenée en position de ralenti de synchronisation pendant toute la durée du changement d'un rapport de transmission. Elle concerne également le dispositif pour la mise en oeuvre de ce procédé dans lequel la boîte de vitesses est munie de blocs synchroniseurs et crabots commandés par des vérins à fluide et/ou électriques et qui se substituent à la commande manuelle utilisée jusque là dans les boîtes de vitesses à engrenages et à crabotages.

Les boîtes de vitesses automatiques sont déjà largement utilisées dans le monde pour assurer sur les véhicules automobiles la liaison entre le moteur et les roues motrices ainsi que les changements de rapport de transmission que requièrent les conditions variables de résistance à l'avancement et de vitesse du véhicule. Ces boîtes de vitesses parfaitement au point par ailleurs présentent, par rapport aux boîtes de vitesses à commande manuelle classiques, l'inconvénient d'un coût élevé lorsque l'on souhaite un nombre de rapports de transmission égal à celui des meilleures boîtes de vitesses mécaniques et d'un rendement de transmission moindre engendrant une consommation plus élevée du véhicule.

Par ailleurs, on est déjà parvenu dans quelques réalisations à conserver les performances de faible coût et de rendement élevé des boîtes mécaniques tout en automatisant complètement leur fonctionnement. Ceci est réalisé par exemple dans la boîte de vitesses classique à commande hydraulique mais les conducteurs expérimentés des véhicules automobiles équipés de ces boîtes de vitesses ne retrouvent pas les vitesses de maniement des rapports de transmission qu'ils obtenaient avec les boîtes de vitesses à commande manuelle. Un procédé (dispositif) selon le préambule de la revendication 1 (8) est connu de GB-A-15/9 982, où le réembrayage est subordonné à un détecteur de synchronisme.

L'un des buts de la présente invention est précisément de permettre de réaliser une boîte de vitesses du type "mécanique" c'est-à-dire couplée à un embrayage à friction et actionnée par des blocs de synchronisation et de crabotage, qui soit à commande entièrement automatique et dans laquelle le réembrayage, après passage des vitesses, s'effectue immédiatement et avec autant de finesse et de discernement que dans le cas d'une commande manuelle.

A cet effet, selon le procédé de l'invention, au cours du passage d'un rapport de transmission à un autre après le débrayage de l'embrayage, on surveille l'évolution de l'accélération, respectivement de la décélération angulaire de l'arbre primaire et l'on déclenche le réembrayage dès que l'accélération ou la décélération de l'arbre primaire, après avoir franchi un seuil haut respectif d'accélération maximale ou de décélération maximale nettement plus important que les accélérations ou décélérations provoquées par le fonctionnement normal de la boîte de vitesses avec un rapport de transmission engagé, atteint à nouveau une valeur faible prédéterminée de seuil bas indiquant que la synchronisation a été réalisée et sera suivie presque immédiatement du crabotage du nouveau rapport de transmission.

Selon une variante de réalisation encore plus sensible du procédé selon l'invention, l'on déclenche le réembrayage, le cas échéant le réembrayage rapide, dès que l'accélération ou la décélération de l'arbre primaire passe à nouveau par une valeur nulle. En variante, l'on déclenche le réembrayage après une courte durée de temporisation suivant l'instant où l'accélération ou la décélération de l'arbre primaire atteint à nouveau la valeur faible prédéterminée de seuil bas.

Selon un autre mode de réalisation du procédé selon l'invention, l'on détermine une vitesse de réembrayage d'autant plus grande que l'accélération demandée par le conducteur du moteur d'entraînement et transmise par un capteur de position de la pédale ou du levier d'accélération, est plus grande.

Selon ce procédé de réembrayage, pour réaliser le démarrage du véhicule en marche automatique, on déclenche un réembrayage programmé correspondant au démarrage du véhicule à partir de l'arrêt lorsque la vitesse de l'arbre secondaire, transmise par un capteur de vitesse de sortie de boîte, est nulle ou très faible. Le réembrayage programmé est réalisé de préférence par fermeture progressive de l'embrayage à mesure que la vitesse de rotation du moteur d'entraînement, transmise par un capteur de vitesse de moteur, augmente sous l'effet de l'accélération au démarrage demandée par le conducteur du moteur d'entraînement.

Le dispositif de commande pour la mise en oeuvre du procédé selon l'invention, comportant un ensemble constitué d'un embrayage à friction et d'une boîte de vitesses qui est commandée par des blocs synchroniseurs et crabots et qui présente un arbre primaire susceptible de se trouver, pendant le passage d'un rapport de transmission à un autre. déconnecté simultanément de l'embrayage et de l'arbre secondaire relié à un organe entraîné en rotation, lesdits blocs synchroniseurs et crabots commandés par des vérins étant aptes à empêcher le crabotage d'un rapport de transmission aussi longtemps que les organes de synchronisation en contact de friction n'ont pas été synchronisés et la commande d'accélérateur du moteur d'entraînement étant inhibée ou ramenée vers la position du ralenti par un moteur d'accélérateur pendant toute la durée du changement de rapport de transmission, est caractérisé en ce qu'il comporte un système capteur de l'accélération et/ou de la décélération angulaire de l'arbre primaire, relié à un bloc électronique central de calcul et de commande dont les circuits sont aptes à contrôler un vérin de débrayage en fonction des indications fournies par le système capteur, de manière à déclencher, au cours d'un changement de rapport de transmission, le réembrayage par retour du vérin de débrayage dés que l'accélération ou la décélération angulaire de l'arbre primaire détectée par le système capteur, après avoir franchi un seuil haut d'accélération ou de décélération maximale nettement plus important que les accélérations ou décélérations provoquées par le fonctionnement normal de la boîte de vitesses avec un rapport de transmission engagé, atteint à nouveau une valeur faible prédéterminée de seuil bas indiquant que la synchronisation a été réalisée.

Selon un autre mode de réalisation, le dispositif de commande comporte un capteur de la position du levier manuel d'accélérateur du moteur d'entraînement, ce capteur étant relié au bloc central de calcul et de commande pour provoquer, via ledit bloc, un déplacement du vérin de débrayage vers la position de réembrayage d'autant plus rapide que l'accélération demandée par le levier manuel d'accélérateur est plus grande.

En variante, le dispositif comporte également un capteur de vitesse de l'arbre secondaire de la boîte de vitesses, ce capteur étant relié au bloc central de calcul et de commande pour déterminer dans un véhicule entraîné par le moteur la vitesse de roulement dudit véhicule et pour déclencher, via le vérin de débrayage, un réembrayage programmé correspondant au démarrage du véhicule à partir de l'arrêt lorsque l'indication de vitesse d'arbre secondaire transmise par ce capteur est nulle ou très faible.

Lorsqu'il est appliqué à un véhicule automobile, le dispositif de commande peut comporter un détecteur de l'application des freins relié au bloc central de calcul et de commande pour provoquer le rappel de l'accélérateur vers la position de ralenti et un éventuel changement de rapport de transmission pour réaliser une action de "frein moteur", changement à la suite duquel le signal d'application des freins provoque, via ledit bloc de commande, le déplacement controlé du vérin de débrayage vers la position embrayée. Le détecteur de l'application des freins peut être apte à détecter l'intensité du freinage demandé et à adresser au bloc central un signal d'intensité de freinage pour provoquer via ce bloc un déplacement du vérin, de débrayage vers la position de réembrayage d'autant plus rapide que l'intensité du freinage demandée est plus grande.

D'autres buts, avantages et caractéristiques apparaîtront à la lecture de la description d'un mode de réalisation de l'invention, faite à titre non limitatif et en regard du dessin annexé où:

- la figure 1 est une représentation schématique d'une boîte de vitesses d'automobile à commande par blocs synchroniseurs et crabots accouplée à un embrayage à friction et du dispositif de commande qui lui est associé selon l'invention;
- la figure 2 est un diagramme temporel de l'évolution de l'accélération de l'arbre primaire de la boîte de vitesses représentée à la figure 1, au cours de la marche mormale et de deux changements de rapport de transmission.

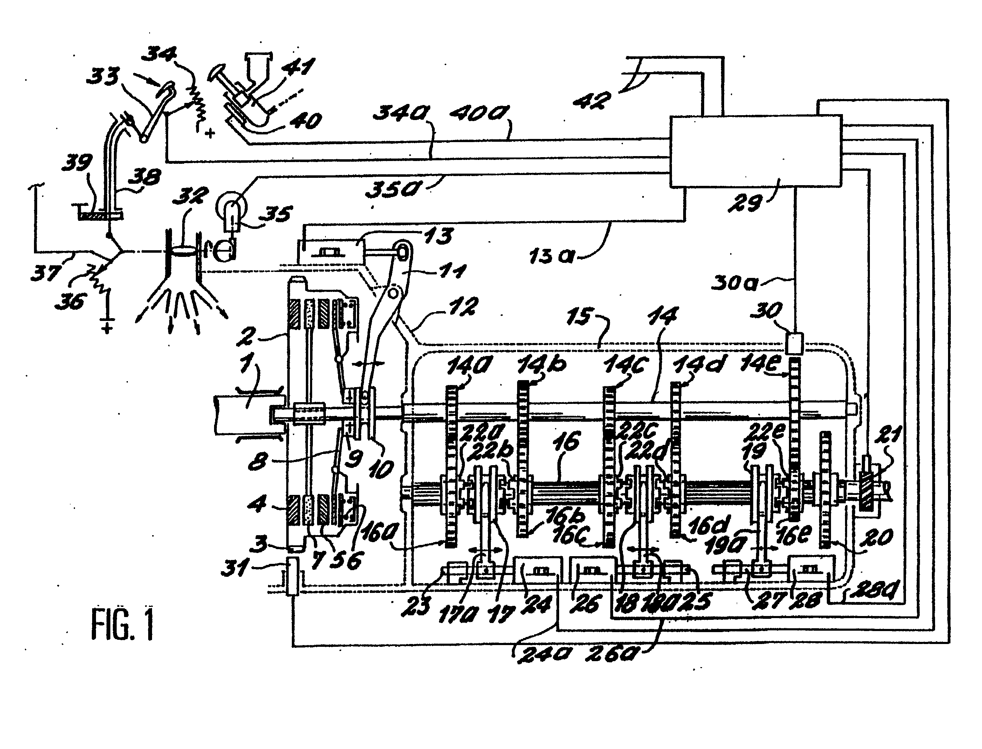

En se reportant à la figure 1 qui représente en partie en coupe la partie boîte de vitesses-embrayage et leur système de commande pour une transmission de véhicule automobile, on voit que le vilebrequin 1 du moteur est relié directement à une cloche d'embrayage 2 à la périphérie de laquelle est sertie une couronne dentée de démarreur 3 et qui porte à l'intérieur un plateau fixe d'embrayage 4 et un plateau mobile 5 repoussé par de puissants ressorts 6 (il s'agit normalement d'un ressort unique à diaphragme) sur un disque d'embrayage 7 de faible épaisseur (pour limiter son inertie) revêtu de matériau de friction. Un jeu de leviers circonférentiels 8 (constitué habituellement par les dents du diaphragme) relié à une butée d'embrayage annulaire 9 permet de repousser annulairement les ressorts 6 à l'aide d'une portée d'embrayage 10 déplacée par un levier de débrayage 11. Ce levier 11 est articulé sur un carter d'embrayage 12 qui porte un vérin de débrayage 13 dont le piston, non représenté, est susceptible d'être poussé par une pression de fluide pour faire pivoter le levier 11 et repousser les ressorts d'embrayage 6 qui libèrent ainsi le disque d'embrayage 7 du contact de friction avec les plateaux d'embrayage 4 et 5.

Le disque d'embrayage 7 est claveté sur l'arbre primaire 14 de la boîte de vitesses représentée schématiquement contenue dans un carter de boîte 15. L'arbre primaire 14, porté par des paliers à l'intérieur du carter 15, est réalisé ici de la façon habituelle, c'est-à-dire qu'il est monobloc avec une série de roues d'engrenage primaires 14a à 14e correspondant, dans le cas de la figure, à cinq rapports de transmission (ou vitesses) différents.

Le carter 15 porte un arbre secondaire 16 relié mécaniquement en permanence aux roues motrices du véhicule équipé de la boîte de vitesses et est muni à l'intérieur du carter 15 de cannelures de liaison en rotation avec des ensembles synchroniseurs-crabots 17, 18 et 19 et, le cas échéant, avec un pignon de prise de force ou de marche arrière 20. A la sortie du carter de boîte de vitesses 15, l'arbre secondaire 16 est accouplé à un capteur de vitesse 21 indiquant en fait, via un circuit de conversion, la vitesse de rotation des roues du véhicule entraînées en rotation par cet arbre secondaire. Sur l'arbre secondaire 16, sont montés fous à rotation des pignons secondaires 16a à 16e qui correspondent respectivement à des rapports de transmission à vitesse de sortie croissante et comportent des portées de synchronisation et des dentures de crabotage 22a à 22e faisant face chacune à l'un des ensembles synchroniseurs respectifs 17, 18 et 19 l'ensemble de synchronisation et de verrouillage étant représenté schématiquement sur la figure 1.

Le bloc synchroniseur 17 est monté coulissant sur l'arbre secondaire 16 et solidaire en rotation de cet arbre entre les portées 22a et 22b et sa rainure centrale est traversée par une fourchette d'actionnement 17a fixée à la tige 23 d'un vérin d'actionnement 24 à trois positions de butée. Le bloc synchroniseur 18 est monté coulissant sur l'arbre secondaire 16 et solidaire en rotation de cet arbre entre les portées 22c et 22d et sa rainure centrale est traversée par une fourchette d'actionnement 18a fixée à la tige 25 d'un vérin d'actionnement 26 à trois positions de butée. Le bloc synchroniseur 19 est monté coulissant sur l'arbre secondaire 16 et solidaire en rotation de cet arbre en face de la seule portée 22e du pignon secondaire 16e de cinquième vitesse, et sa rainure est traversée par une fourchette 19a fixée à la tige de piston 27 d'un vérin 28 à deux positions de butée. Les vérins 24, 26 et 28 d'actionnement des blocs synchroniseurs sont de préférence des vérins hydrauliques présentant une position centrale de butée de point mort et deux positions extrêmes d'engagement de vitesse (l'une de ces positions étant par exemple inhibée pour le vérin 28). Les vérins 24, 26 et 28 peuvent avantageusement être couplés par flasquage à un distributeur d'un fluide hydraulique sous pression. Les vérins 24, 26 et 28 et leurs distributeurs peuvent être logés ou immergés à l'intérieur du carter 15 qui récupère alors leurs fuites hydrauliques éventuelles, ce qui supprime tous les problèmes d'étanchéité et de conduite de retour de fluide, ainsi que les problèmes de traversée qui se réduisent au passage étanche des faisceaux respectifs de fils de commande 24a, 26a et 28a reliés à un bloc central électrique et électronique de calcul et de commande 29.

Le système de surveillance de la boîte de vitesses est complété selon l'invention par un capteur de vitesse d'arbre primaire 30 relié au bloc central 29 par un circuit 30a. Ce capteur 30 est un capteur de vitesse angulaire qui mesure par exemple la durée du passage de chaque dent de la roue dentée primaire 14e de cinquième vitesse et qui transmet par un circuit 30a au bloc de calcul 29 un signal de période qui est mis en forme et dérivé dans le bloc électronique 29 pour être transformé en un signal analogique des variations de vitesses, c'est-à-dire d'accélération ou de décélération angulaire de l'arbre primaire 14. Le bloc de calcul et de commande 29 est relié à un capteur de vitesse de moteur 31 représenté sur la figure par un détecteur de défilement des dents de la couronne de démarreur 3 mais qui est le plus souvent remplacé par un prélevement direct sur le circuit d'allumage du moteur.

Du fait de l'automatisation de la commande de la boîte de vitesse 15, le papillon des gaz 32 (dans le cas représenté d'un moteur à combustion interne à allumage commandé) ou l'accélérateur dans le cas général, y compris celui des moteurs à cycle diésel, est télécommandé par voie élec trique. Pour cela, la pédale d'accélérateur 33 est couplée à un organe de commande électrique 34, tel qu'un potentiomètre, relié par un circuit 34a au bloc central 29 qui délivre, par un circuit de commande 35a, des ordres de commande électriques à un moteur pas-à-pas 35 d'actionnement du papillon de gaz 32. Afin d'assurer la précision et la fidélité de l'asservissement, le papillon 32 est relié mécaniquement à un potentiomètre de recopie 36 qui ramène, en contre-réaction par un circuit 37, en permanence au bloc central 29, une indication sur la position réelle instantanée du papillon des gas 32. Afin de pallier une défaillance de la servo-commande du papillon des gaz ou bien de permettre un retour en commande manuelle intégrale, on peut prévoir, reliée à la pédale d'accélérateur 33, une commande par câble 38, normalement inhibée par un relâchement de la gaine du câble mais qui peut être activée par une butée de gaine 39 à commande manuelle.

Le bloc central électrique-électronique 29 peut recevoir par un circuit 40a des signaux d'application des freins en provenance d'un capteur d'application des freins 40 plaqué par exemple sur la paroi du maîtrecylindre de freinage 41. Comme on l'a déjà expliqué pour les vérins 24, 26 et 28, le vérin de débrayage 13 peut être intégré avec un distributeur de fluide hydraulique sous pression, qui est alors piloté en continu en débit et/ou en pression par une ligne électrique 13a reliée au bloc central 29. En dehors de ses liaisons non représentées avec l'alimentation électrique, avec les mémoires ou les cartes de son calculateur définissant les points de passage des vitesses en fonction du régime et du couple moteur, de la vitesse du véhicule et de la position de la pédale d'accélérateur 33, le bloc central 29 est relié par des faisceaux de circuit 42 à d'autres circuits de surveillance et/ou de commande comme des boutons poussoirs de commande en manuel et non asservie de la boîte de vitesses.

La mise en oeuvre du procédé de commande automatique de boîte de vitesses à l'aide du dispositif représenté schématiquement à la figure 1 va maintenant être explicitée.

On suppose que le conducteur du véhicule équipé de la boîte de vitesses automatisée selon l'invention désire faire le démarrer le véhicule après avoir démarré le moteur thermique de celui-ci. Il appuie pour cela sur la touche démarrage ou place le levier manuel de vitesse sur le circuit route ou D ("drive" en langue anglaise) et appuie sur la pédale d'accéléra teur 33 du moteur. Le bloc central de commande 29 relié par les faisceaux 42 à la commande manuelle et par le circuit 34 à la pédale d'accélérateur, actionne aussitôt le vérin de débrayage 13 qui débraye et libère le disque d'embrayage 7, la boîte de vitesses étant au point mort c'est-à-dire toutes les roues dentées au pignon secondaire 16a à 16e tournant en fou sur l'arbre secondaire 16. Dès le débrayage, l'arbre primaire 14 solidaire en rotation du disque d'embrayage 7 qui porte la plus grosse part de l'inertie est en rotation ou en "vol" libre et tourne à la vitesse de ralenti normal ou accéléré du moteur, cette vitesse étant cependant progressivement ralentie par les frottements divers existants à l'intérieur de la boîte de vitesses. Le capteur 30 transmet au bloc 29 les indications de vitesse angulaire de l'arbre primaire 14 qui sont dérivées dans ce bloc pour mesurer alors la décélération angulaire γ de l'arbre primaire 14. Le bloc central 29 actionne immédiatement après le débrayage par le vérin 13 le vérin 24 qui pousse le bloc synchroniseur 17 au contact de la portée de synchronisation et de crabotage 22a de la couronne dentée secondaire 16a de la première vitesse. Sous l'effet de la friction entre d'une part le bloc 17 solidaire via l'arbre secondaire 16 des roues immobilisées du véhicule et, d'autre part la portée de synchronisation 22a, l'arbre primaire 14 ralentit brutalement et le bloc 29 mesure une augmentation de la décélération $\gamma$ de l'arbre primaire au-delà d'un seuil haut de décélération, ce qui déclenche une surveillance particulière (par exemple par un microprocesseur) de la décélération en "vol" libre de l'arbre primaire. Dès que l'arbre primaire 14 repasse par un seuil bas de décélération, le bloc de commande 29 déclenche le réembrayage de l'embrayage en laissant rentrer "en course et en pression" la tige de piston du vérin de débrayage 13. Le capteur de vitesse d'arbre secondaire 21 ayant détecté que l'arbre secondaire 26 était immobilisé, le bloc 29 déclenche un réembrayage programmé correspondant au démarrage du véhicule. Afin d'obtenir une bonne progressivité de démarrage dans des conditions variables de pente et d'adhérence au sol, en tenant compte de la consigne d'accélération du conducteur et en évitant une dissipation excessive d'énergie par friction dans l'embrayage et l'échauffement de celui-ci, la stratégie du réembrayage programmé de démarrage consiste à fermer progressivement l'embrayage à mesure, non seulement de l'action d'accélération du conducteur mesurée par le potentiomètre 34, mais surtout de l'augmentation de la vitesse de rotation du moteur mesurée par le capteur 31. Le couple l'embrayage croît ainsi parallèlement à l'augmentation du couple du moteur et on ne risque ni emballe ment du moteur, ni accrochage de l'embrayage conduisant au calage du moteur. La progressivité du couple d'embrayage est obtenue en contrôlant non seulement la baisse de la pression d'alimentation du vérin mais aussi le débit d'évacuation de l'huile du vérin et donc la vitesse de rentrée de la tige du vérin 13 soumise aux fluctuations rapides de la force de réaction du ressort à diaphragme utilisé habituellement à la place des ressorts d'embrayage 6.

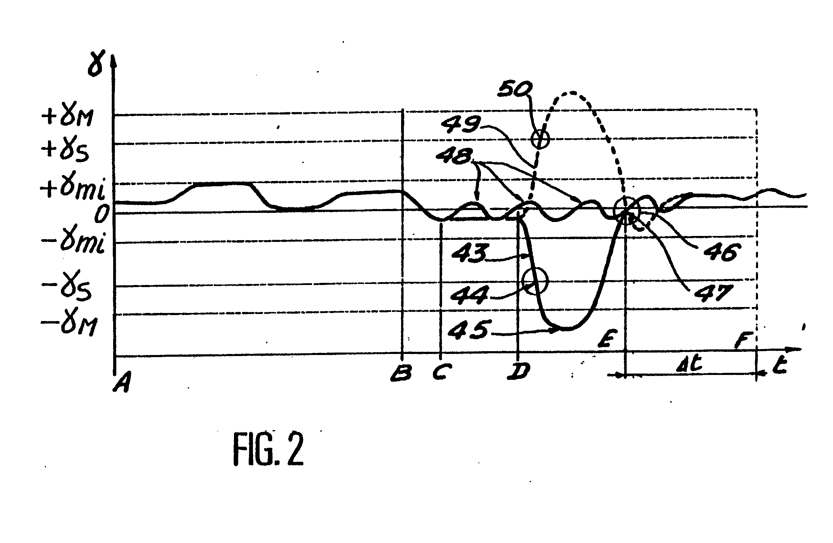

Le véhicule automobile étant en marche normale sur un rapport de transmission de la boîte de vitesses, on va maintenant examiner en référence au diagramme temporel de la figure 2, le comportement du dispositif de commande de la boîte de vitesses automatisée en cas de changement de rapport de transmission ou "de vitesse". Au cours de la marche normale du véhicule, par exemple en quatrième vitesse, le bloc synchroniseur et crabot 18 est engagé par le vérin 26 sur la portée de crabotage 22d de la roue dentée 16d et la transmission et la transformation de couple sont établies entre le vilebrequin 1 du moteur et les roues du véhicule, via l'arbre primaire 14 rendu solidaire de l'embrayage du vilebrequin, la roue dentée primaire de quatrième vitesse 14d et le pignon secondaire de quatrième vitesse 16d rendu solidaire par le bloc synchroniseur 18 de l'arbre secondaire 16 relié mécaniquement aux roues par le reste de la transmission. Le bloc 29 détecte en permanence, via le capteur 30, les accélérations ou décélérations $\gamma$ de l'arbre primaire 14 alors relié en rotation au moteur et aux roues du véhicule, et ces accélérations positives ou négatives fluctuent à l'intérieur d'une fourchette comprise entre des valeurs maximales $+\gamma mi$ et $-\gamma mi$ représentant des accélérations positives et négatives minimales qui ne sont généralement d'ailleurs pas égales en valeur absolue en fonction des sollicitations différentes du véhicule en phases d'accélération et de décélération. Ces fluctuations sont représentées sur la zone AB du diagramme temporel où le véhicule qui est alors en augmentation de vitesse, n'est soumis qu'à des accélérations.

A partir du point B, le bloc 29 de calcul et de commande détermine à l'aide des algorithmes de plages d'utilisation, en fonction du régime moteur mesuré par le capteur 31 et de la position de la pédale d'accélérateur 33 mesurée par le capteur 34, qu'il est nécessaire et économique de passer en cinquième vitesse, notamment pour réduire le régime moteur et diminuer la consommation, le bruit et l'usure du moteur. Le bloc 29 adresse alors, par le circuit 35a, un ordre au moteur pas-à-pas 35 d'actionnement du papillon qui ramène le papillon 32 vers la position de ralenti à l'insu du conducteur qui continue à appuyer sur la pédale d'accélération, ce que continue à mesurer le capteur 34. Dès que l'ordre adressé au moteur 35 a été suivi d'effet, ce que mesure le potentiomètre de recopie 36 et le capteur 30 qui indique pour l'arbre primaire 14 une légère décélération sur la zone temporelle CD du diagramme de la figure 2, le bloc 29 adresse par le circuit 13a un ordre de débrayage rapide au vérin 13. Dès que le débrayage est effectif, ce qui peut être mesuré par la montée en pression dans le vérin 13 par aussi par une détection (non représentée) de la course de débrayage du vérin 13, le vérin de synchroniseur 26 reçoit un ordre de retour en position neutre ou de point mort, ce qui décrabote le bloc 18 et le pignon secondaire de quatrième vitesse 16d.

D'autre part, vérin de synchroniseur 28 reçoit, via la ligne 28c, un ordre d'actionnement pour appliquer la surface de friction du bloc 19 sur la portée de friction 22e du pignon secondaire de cinquième 16e. Sous l'effet de la friction entre le bloc 19 et la portée 22e, la vitesse de l'arbre primaire, alors en vol libre depuis le décrabotage entre le bloc 18 et le pignon secondaire de quatrième 16d, décroît alors rapidement et le bloc de calcul 29 mesure, sur la partie de courbe 43, à partir des indications du capteur 30, une décélération $-\gamma$ croissante qui dépasse, au point 44, la valeur du seuil haut $-\gamma s$ en mémoire dans le bloc 29.

Le dépassement de $-\gamma s$ active un processus, par exemple un programme de microprocesseur, qui surveille spécialement l'évolution de la décélération de l'arbre primaire, laquelle augmente encore jusqu'à un maximum au point 45 puis diminue lorsque la synchronisation entre le bloc synchroniseur 19 relié mécaniquement aux roues du véhicule et le pignon de cinquième vitesse 16e en rotation libre avec l'arbre primaire 14, se poursuit. Dans la zone 46 marquée par un cercle, la décélération de l'arbre primaire, devient très faible et le processus du bloc 29 qui surveille l'évolution de la décélération de l'arbre primaire 14 déclenche le réembrayage par le vérin 13, car le blocage de synchroniseur qui empêchait le vérin 28 d'engager les crabots du bloc 19 sur les crabots de la portée 22e du pignon 16e a disparu avec la quasi disparition du couple de friction entre le bloc 19 et le pignon 16e et le vérin 28 a craboté la cinquième vitesse en un temps très court.

Afin d'obtenir le changement de rapport de transmission ou de vitesse le plus rapide possible, le bloc de calcul 29 surveille le passage de l'accélération de l'arbre primaire par zéro au point 47 et déclenche alors, par le circuit 13a d'actionnement du vérin 13, le réembrayage à partir du point E sur le diagramme temporel, c'est-à-dire immédiatement après le crabotage.

Le conducteur du véhicule qui réclame, en continuant à appuyer sur la pédale 33, la reprise la plus rapide possible de l'accélération du véhicule, perçoit la fermeture au moins partielle du papillon 32 du carburateur et la phase de faible décélération de son véhicule (indiquée par le capteur 30 sur la plage temporelle CD) pendant toute la durée du changement de rapport de transmission jusqu'au point temporel E où l'embrayage réembraye sur le rapport de cinquième vitesse déjà craboté pendant que le moteur pas-à-pas 35 est actionné à partir du bloc 29 pour réouvrir le papillon des gaz 32. Grâce au capteur 30 et à la détection de la décélération de l'arbre primaire 14 au cours de sa phase de rotation libre, le réembrayage peut commencer immédiatement après le crabotage de la cinquième vitesse. L'accélération du véhicule reprend progressivement à partir du point F avec la fermeture de l'embrayage et l'attente du conducteur (indiquée par la plage $\Delta T$ sur la figure 2) est ainsi minimisée.

Au-delà du point temporel F, la décélération de l'arbre primaire 14 se transforme en accélération lente au rythme de celle du véhicule. A titre de comparaison, on a indiqué sur la courbe 48 les fluctuations de l'accélération $\gamma v$ du véhicule pendant le passage de la quatrième à la cinquième vitesse. Ces fluctuations que le bloc 29 peut mesurer à partir des indications du capteur 21 de vitesse angulaire d'arbre secondaire, sont d'une amplitude beaucoup plus faible que celles enregistrées sur l'arbre primaire 14 et sont causées principalement par les oscillations de la suspension et les variations de la résistance à l'avancement due au frottement aérodynamique, à la pente ou au freinage éventuels) du véhicule, car le moteur soumis à de fortes variations de couple par suite de la fermeture partielle du papillon des gaz 32, est déconnecté des roues.

Si l'on examine parallèlement une descente de vitesse ou "rétrogradage", par exemple de la cinquième à la quatrième vitesse, on retrouve la même évolution des accélérations mais en sens inverse. On voit sur la courbe 49 en pointillés à la figure 2, l'évolution de la variation de vitesse (accélération positive ou négative) de l'arbre primaire 14 au cours du passage de cinquième en quatrième vitesse. Après la fermeture du papillon des gaz 32 et le débrayage, la vitesse de l'arbre primaire 14 qui reste relié aux roues du véhicule, varie encore comme celle du véhicule. Dès que le bloc synchroniseur 19 a été décraboté du pignon secondaire de cinquième vitesse 16e et ramené au point mort, l'arbre primaire 14 se trouve en rotation libre et ralentit avec une décélération faible sensiblement constante sur le parcours temporel CD. Dès que le vérin de synchronisateur 26 applique le bloc de synchronisation 18 au contact de la portée de synchronisation 22d du pignon secondaire de quatrième vitesse 16d, relié mécaniquement à l'arbre primaire 14, celui-ci est accéléré par l'arbre secondaire 16 car, pour rejoindre la vitesse du véhicule, il doit augmenter sa vitesse alors qu'il a légèrement ralenti précédemment. L'arbre primaire doit subir une accélération plus importante en valeur absolue que la décélération précédente pour le passage de quatrième en cinquième vitesse. Cette accélération s'étend sur toute la courbe 49 et atteint au point 50 le seuil haut $+\gamma s$ qui active dans le bloc 29 le circuit de surveillance de l'accélération de l'arbre primaire 14. Lorsque la courbe 49 repasse par une valeur nulle au point 47 indiquant que le crabotage a été effectué entre le bloc synchroniseur 18 et le pignon secondaire de quatrième vitesse 16d, le réembrayage est déclenché sur le vérin de débrayage 13.

Parallèlement au réembrayage après le crabotage de la quatrième vitesse, le papillon des gaz est ramené par le moteur 35 dans la position réclamée par le conducteur agissant sur la pédale d'accélérateur 33 et qui peut alors être une position de relâchement pour obtenir un effet de frein moteur. Le passage des autres vitesses à la montée ou à la descente s'effectue de la même manière en donnant lieu sensiblement au même diagramme des accélérations négatives ou positives de l'arbre primaire 14 qui, sur le plan de sa rotation libre, est à considérer accompagné cinématiquement par le disque d'embrayage 7 qui renferme la plus grande part de l'inertie et par les roues dentées et pignons secondaires 16a à 16e qui tournent alors fous sur l'arbre secondaire 16.

Il est possible de déterminer expérimentalement pour chaque type d'arbre primaire considéré sur le plan cinématique (c'est-à-dire avec le disque d'embrayage et les roues et pignons secondaires), les accélérations et décélérations maximales normales $\gamma M$ que l'on enregistre à chaque changement de rapport de transmission à la montée ($-\gamma M$) et à la descente ($+\gamma M$) des vitesses. Ces valeurs qui diffèrent normalement en valeur absolue selon qu'il s'agit d'accélération positive (rétrogradage) ou négative (montée des vitesses) ont été portées sur le diagramme de la figure 2 et il est prudent de choisir des valeurs de seuil haut $+\gamma s$ et $-\gamma s$ qui leur soient nettement inférieures tout en restant nettement supérieures aux valeurs minimales observées au cours de la marche normale du véhicule avec un rapport de transmission craboté, ceci afin d'obtenir dans le bloc 29 une bonne discri mination des phases de synchronisation. On remarque sur le diagramme de la figure 2 que les accélérations négatives et positives maximales de l'arbre primaire observées au cours d'une phase de synchronisation sont normalement supérieures aux valeurs de décélération maximales normales $-\gamma M$ et $+\gamma M$.

Le capteur 40 de détection de l'application des freins permet au bloc de calcul et de commande 29 de faire déclencher un réembrayage immédiat au cours d'une opération de rétrogradage des vitesses déclenchée juste avant ou pendant une phase de freinage par le conducteur (par exemple en commande semi-automatique) qui souhaite, par exemple, utiliser simultanément le frein moteur suivi d'une reprise d'accélération dès le relâchement des freins avant la sortie d'un virage. L'utilisation d'un détecteur de décélération d'arbre primaire permet dans beaucoup de cas de conduite, d'approcher ou même de dépasser la vitesse d'actionnement des changement de rapport de transmission qui est atteinte en commande manuelle par des conducteurs habiles et expérimentés. Le capteur 30 de détection de la vitesse de l'arbre primaire est très facile à installer en coopération avec la denture de la roue primaire de cinquième vitesse 14e, comme représenté à la figure 1, ou en coopération avec une autre roue ou un autre pignon de l'arbre primaire 14 et il ne nécessite pratiquement aucun réglage, à la différence des systèmes connus de détection du crabotage et du verrouillage des vitesses qui donnent une indication de verrouillage plus sûre mais nécessitent, pour chaque rapport de transmission un capteur différent très difficile à positionner et à régler.

## Revendications

1.- Procédé de commande automatique de changement de rapport de transmission dans une boite de vitesse reliée à un moteur d'entraînement, par exemple de véhicule automobile, par un embrayage à friction (7) ladite boîte de vitesses comportant un verrouillage par synchroniseurs (17–19) et crabots (22a–22c) et un arbre primaire (14) susceptible de se trouver, pendant le passage d'un rapport de transmission à un autre, simultanément déconnecté méchaniquement de l'embrayage et de l'arbre secondaire (16) relié à un organe entraîné en rotation, lesdits synchroniseurs étant aptes à empêcher le crabotage d'un rapport de transmission aussi longtemps que les organes de synchronisation en contact de friction n'ont pas été synchronisés et la commande d'accélérateur (33) du moteur d'entraînement étant inhibée ou ramenée vers la position du ralenti pendant toute la durée du changement de rapport de transmission, caractérisé en ce qu'au cours du passage d'un rapport de transmission à un autre, après le débrayage de l'embrayage (2 à 8), on surveille l'évolution de l'accélération ou respectivement de la décélération angulaire de l'arbre primaire (14) et en ce que l'on déclenche le réembrayage dès que l'accélération ou la décélération de l'arbre primaire, après avoir franchi un seuil haut respectif d'accélération maximale ou de décélération maximale nettement plus important que les accélérations ou décélérations provoquées par le fonctionnement normal de la boîte de vitesses avec un rapport de transmission engagé, atteint à nouveau une valeur faible prédéterminée de seuil bas indiquant que la synchronistion a été réalisée.

2.- Procédé selon la revendication 1, caractérisé en ce que l'on déclenche la réembrayage dès que l'accélération ou la décélération de l'arbre primaire (14) passe à nouveau par une valeur nulle.

3.- Procédé selon l'une des revendications 1 ou 2, caractérisé en ce que l'on déclenche un réembrayage rapide dès que l'accélération ou la décélération de l'arbre primaire (14) passe à nouveau par une valeur nulle.

4.- Procédé selon l'une des revendications 1 à 3, caractérisé en ce que l'on déclenche le réembrayage après une courte durée de temporisation suivant l'instant où l'accélération ou la décélération de l'arbre primaire (14) atteint à nouveau la valeur faible prédéterminée de seuil bas.

5.- Procédé selon l'une des revendications 1 à 4, caractérisé en ce que l'on détermine une vitesse de réembrayage d'autant plus grande que l'accélération demandée par le conducteur du moteur d'entraînement et transmise par un capteur (34) de position de la pédale (33) ou du levier d'accélérateur, est plus grande.

6.- Procédé selon l'une des revendications 1 à 5, caractérisé en ce que l'on déclenche un réembrayage programmé correspondant au démarrage du véhicule à partir de l'arrêt lorsque l'indication de vitesse de l'arbre secondaire (16) transmise par un capteur de vitesse de sortie de boîte (21), est nulle ou très faible.

7.- Procédé selon la revendication 6, caractérisé en ce que l'on réalise le réembrayage programmé par fermeture progressive de l'embrayage à mesure que la vitesse de rotation du moteur d'entraînement, transmise par un capteur de vitesse de moteur (31), augmente sous l'effet de l'accélération au démarrage demandée par le conducteur du moteur d'entraînement.

8.- Dispositif de commande pour la mise en oeuvre du procédé selon l'une des revendications 1 à 7, comportant un ensemble constitué d'un embrayage à friction (7) et d'une boîte de vitesses qui est commandée par des blocs synchroniseurs (17–19) et crabots (22a–22c) et qui présente un arbre primaire (14) susceptible de se trouver, pendant le passage d'un rapport de transmission à un autre, déconnecté simultanément de l'embrayage (7) et de l'arbre secondaire (16) relié à un organe à entraîner en rotation, lesdits blocs synchroniseurs et crabots commandés par des vérins étant aptes à empêcher le crabotage d'un rapport de transmission aussi longtemps que les organes de synchronisation en contact de friction n'ont pas été synchronisés et la commande d'accélérateur (33) du moteur d'entraînement étant inhibée ou ramenée vers la position du ralenti par un moteur d'accélérateur (35) pendant toute la durée du changement d'un rapport de transmission, caractérisé en ce qu'il comporte un système capteur (30, 29) de l'accélération et/ou de la décélération angulaire de l'arbre primaire (14), relié à un bloc électronique central (29) de calcul et de commande dont les circuits sont aptes à contrôler un vérin de débrayage (13) en fonction des indications fournies par le système capteur (30, 29) pour déclencher, au cours d'un changement de rapport de transmission, le réembrayage par retour du vérin de débrayage (13) dès que l'accélération ou la décélération angulaire de l'arbre primaire (14) détectée par le système capteur (29, 30), après avoir franchi un seuil haut d'accélération ou de décélération minimale nettement plus important que les accélértions ou décélérations provoquées par le fonctionnement normal de la boîte de vitesses avec un rapport de transmission engagé, atteint à nouveau une valeur faible prédéterminée de seuil bas indiquant que la synchronisation a été réalisée.

9.- Dispositif selon la revendication 8, caractérisé en ce qu'il comporte un capteur (34) de la position du levier manuel d'accélération (33) du moteur d'entraînement, ce capteur étant relié au bloc central (29) de calcul et de commande pour provoquer, via ledit bloc, un déplacement du vérin de débrayage (13) vers la position de réembrayage d'autant plus rapide que l'accélération demandée par le levier manuel d'accélérateur (33) est plus grande.

10.- Dispositif selon l'une des revendications 8 ou 9, caractérisé en ce qu'il comporte un capteur (21) de la vitesse de l'arbre secondaire de la boîte de vitesse, ce capteur étant relié au bloc central (29) de calcul et de commande pour déterminer, dans un véhicule entraîné par le moteur, la vitesse de roulement dudit véhicule et pour déclencher, via la vérin de débrayage (13), un réembrayage programmé correspondant au démarrage du véhicule à partir de l'arrêt lorsque l'indication de vitesse d'arbre secondaire transmise par ce capteur (21) est nulle ou très faible.

11.- Dispositif selon une des revendications 8 à 10, caractérisé en ce que, lorsqu'il est appliqué à un véhicule automobile, il comporte un détecteur de l'application du frein (40) relié au bloc central (29) de calcul et de commande pour provoquer le rappel de l'accélérateur (33) vers la position de ralenti et un éventuel changement de rapport de transmission pour réaliser une action de "frein moteur", changement au cours duquel le signal d'application des freins en provenance dudit détecteur (40) provoque, via ledit bloc de commande (29), le déplacement du vérin de débrayage (13) vers la position embrayée.

12.- Dispositif selon la revendication 11, caractérisé en ce que le détecteur de l'application de freins (40) est apte à détecter l'intensité du freinage demandée et à adresser au bloc central (29) un signal d'intensité de freinage pour provoquer via ce bloc (29) un déplacement du vérin de débrayage (13) vers la position de réembrayage d'autant plus rapide que l'intensité du freinage demandée est plus grande.

**Patentansprüche**

1. Verfahren zum automatischen Schalten des Getriebegangs in einem Getriebe, das mit einem Antriebsmotor z.B. eines Kraftfahrzeugs verbunden ist, mittels einer Reibungskupplung (7), wobei das Getriebe eine Verriegelungsanordnung mit Synchronisiereinrichtung (17 bis 19) und Klauen (22a bis 22c) aufweist, sowie eine Primärwelle (14), die während eines Gangwechsels sowohl von der Kupplung als auch von der mit einem drehbar angetriebenen Bauteil verbundenen Sekundärwelle (16) mechanisch gelöst sein kann, während die Synchronisiereinrichtung in der Lage ist, das Einrasten eines Ganges so lange zu verhindern, wie die Bauteile der Synchronisiereinrichtung im Reibkontakt nicht synchronisiert sind und eine Betätigung des Gaspedals (33) des Antriebsmotors verhindert wird oder dieses in die Leerlaufstellung gebracht wird, während der Dauer des Gangwechsels, dadurch gekennzeichnet, daß während des Übergangs von einem Gang zu einem anderen und nach dem Ausrücken der Kupplung (2 bis 8) die Entwicklung der Winkelbeschleunigung bzw. der Winkelverzögerung der Primärwelle (14) überwacht wird, und daß das Einrücken der Kupplung ausgelöst wird, sowie die Beschleunigung oder die Verzögerung der Primärwelle, nach Überschreiten eines oberen Schwellwertes der maximalen Beschleunigung bzw. der maximalen Verzögerung, die erheblich über den Beschleunigungen bzw. Verzögerungen liegen, die durch den Normalbetrieb des Getriebes mit eingelegtem Gang entstehen, erneut einen niedrigen vorgegebenen Schwellwert erreicht, der anzeigt, daß die Synchronisation durchgeführt worden ist.

2. Verfahren nach Anspruch 1, dadurch gekennzeichnet, daß das Einrücken der Kupplung ausgelöst wird sowie die Beschleunigung oder die Verzögerung der Primärwelle (14) erneut einen Nullwert passiert.

3. Verfahren nach einem der Ansprüche 1 oder 2, dadurch gekennzeichnet, daß ein schnelles Einrücken der Kupplung ausgelöst wird, sowie die Beschleunigung oder die Verzögerung der Primärwelle (14) erneut einen Nullwert passiert.

4. Verfahren nach einem der Ansprüche 1 bis 3, dadurch gekennzeichnet, daß das Einrücken der Kupplung ausgelöst wird eine kurze Zeit nach dem Augenblick zu dem die Beschleunigung oder die Verzögerung der Primärwelle (14) erneut den niedrigen vorgegebenen Schwellwert erreicht.

5. Verfahren nach einem der Ansprüche 1 bis 4, dadurch gekennzeichnet, daß eine Einkuppelgeschwindigkeit festgelegt wird, die um so größer ist je größer die vom Fahrer dem Antriebsmotor erteilte Beschleunigung ist, die von einem Fühler (34) für die Stellung des Gaspedals (33) oder des Beschleunigungshebels übertragen wird.

6. Verfahren nach einem der Ansprüche 1 bis 5, dadurch gekennzeichnet, daß ein programmiertes Einrücken der Kupplung ausgelöst wird entsprechend dem Anfahren des Fahrzeugs aus der Haltestellung, wenn die von einem Geschwindigkeitsfühler am Getriebeausgang (21) angezeigte Geschwindigkeit der Sekundärwelle (16) Null oder sehr klein ist.

7. Verfahren nach Anspruch 6, dadurch gekennzeichnet, daß das programmierte Einrücken der Kupplung durchgeführt wird durch zunehmendes Schließen der Kupplung entsprechend der Rotationsgeschwindigkeit des Antriebsmotors, die durch einen Geschwindigkeitsfühler (31) für den Motor übertragen wird und durch die Beschleunigung aus dem Haltezustand erhöht wird, welche der Fahrer dem Antriebsmotor erteilt.

8. Schalteinrichtung zur Durchführung des Verfahrens nach einem der Ansprüche 1 bis 7, mit einer Einheit, die aus einer Reibungskupplung (7) und aus einem Getriebe besteht, das durch Synchronisiereinheiten (17 bis 19) und Klauen (22a bis 22c) gesteuert wird und das eine Primärwelle (14) aufweist, die während des Übergangs von einem Gang zu einem anderen gleichzeitig sowohl von der Kupplung (7) als auch von der mit einem in Drehbewegungen zu versetzenden Teil verbundenen Sekundärwelle (16) gelöst ist, wobei die von Druckvorrichtungen gesteuerten Synchronisiereinheiten und Klauen in der Lage sind, das Einrasten des Ganges so lange zu verhindern, wie die Synchronisierungs-Bauteile im Reibungskontakt nicht synchronisiert sind, während die Steuerung des Gaspedals (33) des Antriebsmotors gesperrt ist oder in Leerlaufstellung durch einen Pedalmotor (35) gebracht wird, während der gesamten Dauer des Gangwechsels, dadurch gekennzeichnet, daß sie eine Fühleranordnung (30, 29) aufweist, für die Winkelbeschleunigung und/oder die Winkelverzögerung der Primärwelle (14), die mit einer zentralen elektronischen Steuer- und Rechenschaltung (29) verbunden ist und deren Schaltkreise in der Lage sind, einen Kupplungsausrückzylinder (13) zu steuern als Funktion der von der Fühleranordnung (30, 29) gelieferten Werte, um während eines Gangwechsels das Einrücken der Kupplung durch Zurückziehen des Kupplungszylinders (13) auszulösen sowie die von der Fühleranordnung (29, 30) festgestellten Winkelbeschleunigungen oder die Winkelverzögerungen der Primärwelle (14), nach Überschreiten eines oberen Schwellwertes der minimalen Beschleunigung bzw. minimalen Verzögerung, die erheblich über den Beschleunigungen bzw. Verzögerungen liegen, die durch den Normalbetrieb des Getriebes mit eingelegtem Gang entstehen, erneut einen niedrigen vorgegebenen Schwellwert erreichen, der anzeigt, daß die Synchronisierung durchgeführt worden ist.

9. Einrichtung nach Anspruch 8, dadurch gekennzeichnet, daß sie einen Stellungsfühler (34) für den manuellen Beschleunigungshebel (33) des Antriebsmotors aufweist, wobei dieser Fühler mit der zentralen Steuer- und Rechenschaltung (29) verbunden ist, um mittels dieser eine Verschiebung des Kupplungszylinders (13) in die Einrückstellung zu bewirken, und zwar um so schneller je größer die vom manuellen Beschleunigungshebel (33) ausgehende Beschleunigung ist.

10. Einrichtung nach einem der Ansprüche 8 oder 9, dadurch gekennzeichnet, daß sie einen Fühler (21) für die Geschwindigkeit der Sekundärwelle des Getriebes aufweist, wobei dieser Fühler mit der zentralen Rechen- und Steuerschaltung (29) verbunden ist, um in einem von einem Motor angetriebenen Fahrzeug die Fahrgeschwindigkeit des Fahrzeugs zu bestimmen und um über den Kupplungszylinder (13) ein programmiertes Kupplungseinrücken auszulösen entsprechend dem Anfahren des Fahrzeugs aus der Haltestellung, wenn die Anzeige der von diesem Fühler (21) übermittelten Geschwindigkeit der Sekundärwelle Null oder sehr geringfügig ist.

11. Einrichtung nach einem der Ansprüche 8 bis 10, dadurch gekennzeichnet, daß im Falle eines Kraftfahrzeuges sie einen Bremsbetätigungsdetektor (40) aufweist, der mit der zentralen Rechen- und Steuerschaltung (29) verbunden ist, um ein Zurückholen des Gaspedals (33) in die Leerlaufstellung zu bewirken sowie einen eventuellen Gangwechsel, um so eine Motorbremsung zu bewirken, wobei während des Wechsels das Bremsbetätigungssignal, das von diesem Detektor (40) stammt, über die Steuerschaltung (29) eine Verschiebung des Kupplungszylinders (13) in Richtung des Einrückens bewirkt.

12. Einrichtung nach Anspruch 11, dadurch gekennzeichnet, daß der Bremsbetätigungsdetektor (40) in der Lage ist, die Intensität der erfolgenden Bremsung festzustellen und der zentralen Schaltung (29) ein Bremsintensitätssignal zu liefern, um über diese Schaltung (29) eine Verschiebung des Kupplungszylinders (13) zu bewirken in Richtung des Wiedereinschaltens, und zwar um so schneller, je größer die Bremsintensität ist.

## Claims

1. A process for automatically controlling a change in transmission ratio in a gearbox connected to a drive engine, for example of a motor vehicle, by a friction clutch (17), said gearbox comprising a locking action involving synchronisers (17–19) and dog clutches (22a–22c) and a primary shaft (14) which during the shift from one transmission ratio to another is capable of being simultaneously disconnected mechanically from the clutch and the secondary shaft connected to a member driven in rotation, said synchronisers being capable of preventing the dog clutch engagement of a transmission ratio as long as the synchronisation members in frictional contact have not been synchronised and the accelerator control (33) of the drive engine being inhibited or returned towards the idle position throughout the duration of the change in a transmission ratio, characterised in that in the course of shifting form one transmission ratio to another after disengagement of the clutch (2 to 8) the evolution in the angular acceleration or deceleration respectively of the primary shaft (14) is monitored and that clutch re-engagement is initiated as soon as the acceleration or deceleration of the primary shaft, after having passed through a respective high threshold in respect of maximum acceleration or maximum acceleration or maximum deceleration which is markedly higher than the levels of acceleration or deceleration caused by normal operation of the gearbox with a transmission ratio engaged, again reaches a low predetermined value at a low threshold, indicating that synchronisation has occurred.

2. A process according to claim 1 characterised in that clutch re-engagement is initiated as soon as acceleration or deceleration of the primary shaft (14) passes again through a zero value.

3. A process according to one of claims 1 to and 2 characterised in that rapid clutch re-engagement is initiated as soon as acceleration or deceleration of the primary shaft (14) passes again through a zero value.

4. A process according to one of claims 1 to 3 characterised in that clutch re-engagement is initiated after a short time delay period following the moment at which acceleration or deceleration of the primary shaft again reaches the low predetermined value of a low threshold.

5. A process according to one of claims 1 to 4 characterised by determining a speed of clutch re-engagement which is increased in proportion to a greater amount of acceleration demanded by the driver of the drive engine and transmitted by a sensor (34) for detecting the position of the accelerator pedal (33) or lever.

6. A process according to one of claims 1 to 5 characterised by initiating programmed clutch re-engagement corresponding to starting of the vehicle from stop when the speed indication of the secondary shaft (16) which is transmitted by a box output speed sensor (21) is zero or very low.

7. A process according to claim 6 characterised by effecting programmed clutch re-engagement by progressive closure of the clutch as the speed of rotation of the drive engine, which is transmitted by an engine speed sensor (31), increases under the effect of acceleration on starting which is demanded by the driver from the drive engine.

8. A control apparatus for carrying out the process according to one of claims 1 to 7 comprising an assembly formed by a friction clutch (17) and a gearbox which is controlled by synchroniser (17–19) and dog clutch (22a–22c) blocks and which has a primary shaft (14) which, during the shift from one transmission ratio to another, is capable of being simultaneously disconnected from the clutch (17) and the secondary shaft (16) connected to a member to be driven in rotation, said synchroniser and dog clutch blocks which are controlled by jacks being capable of preventing dog clutch engagement of a transmission ratio as long as the synchronisation members in frictional contact have not been synchronised and the accelerator control (33) of the drive engine being inhibited or returned towards the idle position by an accelerator motor (35) throughout the entire duration of the change in a transmission ratio, characterised in that it comprises a system (30, 29) for sensing the angular acceleration and/or decleration of the primary shaft (14), which is connected to a central electronic calculating and control block (29), the circuits of which are capable of controlling a clutch disengagement jack (13) in dependence on the indications provided by the sensor system (30, 29) in order, in the course of a change in transmission ratio, to initiate clutch reengagement by return of the clutch disengagement jack (13) as soon as the angular acceleration or deceleration of the primary shaft (14), which is detected by the sensor system (29, 30), after having passed through a high minimum acceleration or deceleration threshold which is substantially greater than the levels of acceleration or deceleration produced by normal operation of the gearbox with a transmission ratio engaged, again reaches a low predetermined value of a low threshold, indicating that synchronisation has been achieved.

9. Apparatus according to claim 8 characterised in that it comprises a sensor (34) for detecting the position of the manual acceleration lever (33) of the drive engine, said sensor being connected to the central calculating and control block (29) to cause, by way of said block, dispalcement of the clutch disengagement jack (13) towards the clutch re-engagement position, the speed of which is increased in proportion to increasing acceleration demanded by the manual accelerator lever (33).

10. Apparatus according to one of claims 8 and 9 characterised in that it comprises a sensor (21) for detecting the speed of the secondary shaft of the gearbox, said sensor being connected to the central calculating and control block (29) in order to determine in a vehicle which is being driven by the engine the speed of movement of said vehicle and by way of the clutch re-engagement corresponding to starting of the vehicle from stop when the indication in respect of speed of the secondary shaft which is transmitted by said sensor (21) is zero or very low.

11. Apparatus according to one of claims 8 to 10 characterised in that, when it is applied to a motor vehicle, it comprises a detector for detecting application of the brakes (40), which is connected to the central calculating and control block (29) to cause the return of the accelerator (33) towards the idle position and possible change in transmission ratio to produce and "engine braking" action, in the course of which change the brake application signal from said detector (40), by way of said control block (29), causes displacement of the clutch disengagement jack (13) towards the clutch engaged position.

12. Apparatus according to claim 11 characterised in that the brake application detector (40) is capable of detecting the intensity of braking demanded and addressing to the central block (29) a braking intensity signal in order by way of said block (29) to cause displacement of the clutch disengagement jack (13) towards the clutch re-engagement position, the speed of which displacement is increased in proportion to increased intensity of the braking action required.

FIG. 1

FIG. 2

EP 0 276 609 B1